# EUROPÄISCHE PATENTSCHRIFT

(11) **EP 2 267 326 B1**
(45) Veröffentlichungstag und Bekanntmachung des Hinweises auf die Patenterteilung: **31.08.2011**
(21) Anmeldenummer: 09008142.3
(22) Anmeldetag: 22.06.2009
(51) Int. Cl.: F16D 1/116, F16D 3/38

(54) **Verschluss zum Sichern einer Kupplungshülse auf einer Welle**
Lock for securing a coupling jacket to a shaft
Fermeture de fixation d'une douille d'embrayage sur un arbre

(43) Veröffentlichungstag der Anmeldung: 29.12.2010
(73) Patentinhaber: GKN Walterscheid GmbH, 53797 Lohmar (DE)
(72) Erfinder: Bürling, Uwe, 53721 Siegburg (DE); Herchenbach, Paul, 53809 Ruppichteroth (DE); Hector, Martin, 53721 Siegburg (DE)
(74) Vertreter: Müller, Thomas Michael

(56) Entgegenhaltungen:
- DE-C1- 3 410 311
- DE-C1- 19 605 894
- GB-A- 2 219 372
- US-A- 5 522 669
- US-A1- 2003 031 508

## Beschreibung

Die Erfindung betrifft einen Verschluß zum Sichern einer Kupplungshülse auf einer mit einer Umfangsnut versehenen Welle, umfassend eine Kupplungshülse, zumindest einen Sperrkörper, der bezogen auf eine Längsachse in einem radialen Durchbruch der Kupplungshülse radial bewegbar aufgenommen ist, sowie Verriegelungsmittel, die gegenüber dem zumindest einen Sperrkörper und der Kupplungshülse axial verschiebbar sind, wobei in einer Riegelstellung der Verriegelungsmittel der zumindest eine Sperrkörper durch die Verriegelungsmittel radial in einer Sperrstellung .gehalten ist, in der der Sperrkörper, zum Eingreifen in die Umfangsnut der Welle in einer Sperrichtung radial aus dem Durchbruch vorsteht.

Einen solchen Verschluß zur drehfesten Sicherung einer Kupplungshülse zeigt die Gebrauchsmusterschrift DE 19 93 808. Der hier beschriebene Verschluß besteht im wesentlichen aus einer Schiebehülse, die durch eine vorgespannte Druckfeder in einer Stellung gehalten wird, in der die Schiebehülse eine Kugel, die in der Kupplungshülse radial verschiebbar einsitzt, radial nach innen verschoben halt, so daß die Kugel in eine Umfangsnut eines mit der Kupplungshülse über eine Verzahnung drehfest verbundenen Wellenendstücks eingreift. Hierüber sind die Kupplungshülse und das Wellenendstück auch axial gegeneinander gesichert. Ein Verschieben der Schiebehülse gibt den Eingriff der Kugel in die Umfangsnut frei.

In der DE 103 24 520 A1 wird eine Kuppelvorrichtung beschrieben, mit der über eine Klauenkupplung, bestehend aus zwei Kupplungselementen, eine Antriebswelle mit der anzutreibenden Welle eines landwirtschaftlichen Geräts verbunden werden kann.

Eines der Kupplungselemente ist drehfest und axial verschiebbar auf einer der Wellen gehalten und wird mittels einer Druckfeder in Richtung des Wellenendes und damit in Richtung einer Einkuppelposition beaufschlagt, in der sich das Kupplungselement gegen einen Spannstift axial abstützt. In der Einkuppelposition sind beide Kupplungselemente über ihre Klauen miteinander im Eingriff. Die Druckfeder stützt sich, auf ihrer den Kupplungselementen abgewandten Seite, über einen kreisringförmigen Vorsprung an der Welle ab, gegenüber der das eine Kupplungselement verschiebbar gehalten ist. Die axiale Verschiebbarkeit unter Federbeaufschlagung gewährleistet für den Fall, daß beide Kupplungselemente beim Einkuppelvorgang mit ihren Klauen stirnseitig aufeinanderstoßen, daß das eine Kupplungselement gegen die Federkraft in eine Auskuppelposition verschoben wird. Beide Kupplungselemente können so zueinander verdreht werden, bis die Klauen gegenseitig ineinander greifen können und das verschiebbare Kupplungselenient durch die Federkraft axial in die Einkuppelposition überführt wird, so daß die Klauen miteinander in Eingriff sind.

Dokument DE3410311 offenbart einen gattungsgemäßen Verschluß.

Aufgabe der vorliegenden Erfindung ist es, eine Kupplungshülse bereitzustellen, die gute Kuppeleigerischaften bei gleichzeitig verbesserter Montage- bzw. Demontagefähigkeit auf einer Welle aufweist.

Die Aufgabe wird durch einen Verschluß der eingangs genannten Art gelöst, wobei der zumindest eine Sperrkörper in dem Durchbruch axial bewegbar ist, so dass in der Riegelstellung der Verriegelungsmittel die Kupplungshülse gegenüber den Verriegelungsmitteln und gegenüber dem zumindest einen Sperrkörper axial verstellbar ist.

Der entscheidende Vorteil des erfindungsgemäßen Verschlusses zum Sichern einer Kupplungshülse auf einer Welle besteht darin, daß die Verschlußfunktion und die Kuppelfunktion in einem eigenständigen, schnellkuppelfähigen Verschluß integriert sind. Der Verschluß ist auf der Welle axial gesichert und besitzt dabei die Kuppelfunktion, wie sie für ein automatisches Einkuppeln erforderlich ist. Die Kupplungshülse ist nämlich in axialer Richtung verstellbar, so daß sie während des Einkuppelvorgangs gegenüber dem entgegengesetzten Kupplungsteil zunächst ausweichen kann, so daß beide gegeneinander verdreht werden können, bis z.B. Kupplungsklauen gegenseitig ineinander greifen können und die Kupplungshülse in axialer Richtung wieder zurückverstellt werden kann.

Nach einer bevorzugten Ausgestaltung ist vorgesehen, daß Federmittel vorgesehen sind, die die Kupplungshülse axial zur Einnahme einer Einkuppelposition beaufschlagen, und daß sich, in der Einkuppelposition der Kupplungshülse, die Verriegelungsmittel gegenüber dem zumindest einen Sperrkörper in der Riegelstellung befinden.

In vorteilhafter Weise ist hierdurch gewährleistet, daß der Verschluß unmittelbar axial gesichert ist und sich in einer betriebsbereiten Position befindet, nachdem er auf einer mit einer Umfangsnut versehenen Welle montiert wurde.

Hierbei können die Federmittel in Form einer Druckfeder dargestellt sein, die sich, zumindest mittelbar, gegen die Kupplungshülse und die Verriegelungsmittel abstützt. Vorzugsweise stützen sich dabei die Kupplungshülse und die Verriegelungsmittel in der Einkuppelstellung, insbesondere mittelbar über den zumindest einen Sperrkörper, axial gegeneinander abstützen.

Bei einer mittelbaren Abstützung über den zumindest einen Sperrkörper kann vorgesehen sein, daß sich, in der Einkuppelposition der Kupplungshülse, die Kupplungshülse über eine erste Begrenzungsfläche des Durchbruchs gegen den zumindest einen Sperrkörper und sich die Verriegelungsmittel über zumindest einen Vorsprung axial gegen den zumindest einen Sperrkörper axial abstützen.

Im einzelnen kann vorgesehen sein, daß der zumindest eine Vorsprung den jeweiligen Durchbruch überdeckt, wobei der Sperrkörper in Richtung zum Vorsprung aus dem Durchbruch herausragt, oder daß der Vorsprung in radialer Richtung in den zumindest einen Durchbruch der Kupplungshülse hineinragt, wobei der Sperrkörper nicht aus dem Durchbruch in Richtung zum Vorsprung herausragen muß.

Vorzugsweise stützen sich die Verriegelungsmittel in der Riegelstellung über den zumindest einen Vorsprung gegen den Sperrkörper axial ab. Insbesondere stützen sich die Verriegelungsmittel mit einer Sperrfläche des zumindest einen Vorsprungs gegen den Sperrkörper ab. Vorzugsweise umfaßt der zumindest eine Vorsprung einen Spannstift, wobei die Sperrfläche von dem Spannstift gebildet ist. Vorgesehen ist, daß die Sperrfläche konisch ausgerichtet ist. Insbesondere ist die Sperrfläche bezogen auf die Längsachse A innenkonisch ausgerichtet, wobei sich die Sperrfläche und der Sperrkörper, in Achsrichtung betrachtet, radial überdecken. Durch diese radiale Überdeckung und die innenkonische Ausrichtung wird gewährleistet, daß der Sperrkörper bei Abstützung an der Sperrfläche mit einer Kraftkomponente beaufschlagt wird, die ihn radial in die Umfangsnut der Welle drückt. Vorgesehen ist, daß der Spannstift in den Verriegelungsmitteln derart gehalten ist, daß er diese gleich einer Sekante schneidet. Hierdurch wird gewährleistet, daß der Spannstift das Innere der Schiebehülse durchschneidet und auf einfache Weise in Bohrungen der Schiebehülse aufgenommen werden, wobei die Bohrungen quer zur Längsachse A veriaufen. Bevorzugt sind zwei parallele und diametral entgegengesetzt angeordnete Spannstifte für einen Verschluß vorgesehen.

Der Verschluß kann vorteilhafterweise, nachdem er zunächst zu einer Baugruppe vormontiert wurde, insgesamt auf der Welle montiert bzw. demontiert werden, ohne daß weitere separate Befestigungsmittef, etwa Splinte oder Sicherungsringe, vonnöten sind. Der Verschluß bildet somit eine eigenständige Baueinheit. Die Verschlußfunktion wird hierbei durch Verriegelungsmittel realisiert, die in einer Riegelstellung den Sperrkörper in einer Sperrstellung halten, in der der Sperrkörper, radial aus dem Durchbruch herausragt und in die Umfangsnut einer Welle eingreifen kann.

Weiterhin ist vorgesehen, daß die Kupplungshülse entgegen die Federkraft der Federmittel gegenüber den Verriegelungsmitteln in eine Auskuppelposition axial verstellbar ist, in der sich die Verriegelungsmittel gegenüber dem zumindest einen Sperrkörper, in der Riegelstellung befinden. Insbesondere ist vorgesehen, daß in der Auskuppelposition der zumindest eine Sperrkörper an einer zweiten Begrenzungsfläche des Durchbruchs anliegt und daß sich der zumindest eine Sperrkörper in der Sperrstellung und in der Riegelstellung der Verriegelungsmittel entgegen der Sperrrichtung gegen eine Sperrfläche der Verriegelungsmittel radial abstützt.

Der Vorteil dieser Anordnung liegt darin, daß der Verschluß bei einer Verstellung der Kupplungshülse in die Auskuppelposition infolge des Anstiegs der Federkraft sicher verriegelt bleibt. Dies wird dadurch erreicht, daß die Verriegelungsmittel über den Sperrkörper, der im Eingriff mit der Umfangsnut der Welle ist, eine fixierte Position gegenüber dieser haben und durch die Verstellung der Kupplungshülse relativ zu den Verriegelungsmitteln die Federmittel komprimiert werden. Außerdem ist vorteilhaft, daß der Verschluß ständig mit einer Federkraft in die Einkuppelstellung beaufschlagt wird, so daß ein automatisches Einkuppeln gewährleistet ist. Über den Verschiebeweg der Kupplungshülse von der Einkuppelposition in die Auskuppelposition erfährt der Sperrkörper eine axiale Verstellung in dem Durchbruch, währenddessen er durch die Sperrfläche der Verriegelungsmittel sicher im radialen Eingriff mit der Umfangsnut gehalten wird. Entscheidend ist, daß durch die axiale Länge des Durchbruchs in der Kupplungshülse der mögliche axiale Verschiebeweg der Kupplungshülse von der Einkuppelposition in die Auskuppelposition bestimmt wird. Vorzugsweise wird die Länge des Durchbruchs so gewählt, daß sich ein Kuppelweg von 14mm ergibt

Bevorzugt sind die Verriegelungsmittel gegenüber dem zumindest einen Sperrkörper in eine Entriegelstellung axial verstellbar, in der der zumindest eine Sperrkörper in eine Freigabestellung bewegbar ist, in der der Sperrkörper, in Sperrichtung nicht radial aus dem Durchbruch herausragt. Insbesondere kann vorgesehen sein, daß der zumindest eine Sperrkörper, in der Freigabestellung entgegen der Sperrichtung radial aus dem Durchbruch herausragt.

Hierüber wird in einfacher Weise gewährleistet, daß der Verschluß als ganze Einheit und durch einfache Handhabung von der Welle demontiert werden kann. Insbesondere ist vorgesehen, daß die Ausnehmung im Längsschnitt seitliche Stützflächen aufweist, die sich in Richtung auf einen Boden der Ausnehmung verjüngen. Jede der Stützflächen ist bezogen auf die Längsachse A innenkonisch aber entgegengesetzt ausgerichtet. Der Vorteil dieser Innenkonischen Ausrichtung ergibt sich daraus, daß gewährleistet, ist, daß der Sperrkörper sicher in die Ausnehmung überführt wird und das Risiko eines Einklemmens minimiert wird. In der Riegelstellung der Verriegelungsmittel liegt die Ausnehmung zumindest soweit axial versetzt zu dem Durchbruch der Kupplungshülse und damit zu dem in dem Durchbruch gehaltenen Sperrkörper, so daß dieser nicht in radialer Richtung in der Ausnehmung wandern kann. Werden die Verriegelungsmittel in Richtung der Entriegelstellung entgegen der Federkraft verstellt, gelangt die Ausnehmung zunehmend zur Deckung mit dem Durchbruch, bis eine Position erreicht wird, in der der Sperrkörper freigegeben ist und in radialer Richtung in die Ausnehmung wandern kann.

In einzelnen ist vorgesehen, daß der Durchbruch in radialer Richtung zwischen einer Außenumfangfläche und einer Innenumfangfläche der Kupplungshülse verläuft.

In vorteilhafter Weise ist es hierdurch möglich, daß der Sperrkörper in der Freigabestellung auf der der Sperrichtung entgegengesetzten Umfangsfläche aus dem Durchbruch vorsteht und in die Ausnehmung der Verriegelungsmittel radial eingreift

Bevorzugt verjüngt sich der Durchbruch zwischen den Umfangsflächen der Krupplungehülse in einer radialen Richtung.

Diese Ausgestaltung gewährleistet, daß der Sperrkörper in dem Durchbruch auch dann sicher gegen Verlust gehalten ist, wenn der Verschluß nicht auf einer Welle montiert ist. Insbesondere ist vorgesehen, daß der Sperrkörper in der einen radialen Richtung durch die Verriegelungsmittel und in der anderen radialen Richtung durch die Verjüngung des Durchbruchs gehalten ist.

Insgesamt ergibt sich durch die Anordnung eine vorteilhaft einfache Kinematik: Werden die Verriegelungsmittel gegen die Federkraft in die Entriegelstellung bewegt, geben die Verriegelungsmittel den Sperrkörper frei, so daß der gesamte Verschluß von der Welle heruntergezogen werden kann. Wird dagegen die Kupplungshülse gegen die Federkraft in die Auskuppelposition verschoben, sichern die Verriegelungsmittel weiterhin den Sperrkörper und damit den gesamten Verschluß gegenüber der Welle, so daß der Verschluß die Funktion des automatischen Einkuppelns übernehmen kann. In jedem Fall geht der Verschluß bei Entlastung immer in die Einkuppelposition zurück.

Die Verriegelungsmittel umfassen vorzugweise eine Schiebehülse, die koaxial zur Längsachse A angeordnet ist. Die Ausbildung als Schiebehülse hat den Vorteil einer einfachen Fertigung. Weiterhin ist eine Hülse unter Beanspruchungsgesichtspunkten günstig, wobei insbesondere vorgesehen ist, daß die Schiebehülse an ihrem einen Ende einen nach radial außen vorstehenden Kragen umfaßt, an dem sich die Federmittel abstützen. Da weiterhin vorgesehen ist, daß die Federmittel in Form einer Druckfeder gestaltet sind und koaxial zur Längsachse A angeordnet sind, ergibt sich einerseits eine günstige axial gerichtete Beaufschlagung der Schiebehülse durch die Druckfeder und andererseits ein kompakter Aufbau des Verschlusses durch die koaxiale Anordnung..

Vorgesehen ist weiterhin, daß die Kupplungshülse an ihrem einen Ende einen Flansch mit Kupplungsmitteln aufweist und daß die Federmittel in Form einer Druckfeder gestaltet sind, wobei sich die Druckfeder an einer radial gerichteten Fläche auf der den Kupplungsmitteln abgewandten Seite des Flansches abstützt.

Insbesondere ist der zumindest eine Sperrkörper in Form einer Kugel gestaltet. Grundsätzlich ist für den Verschluß eine Ausführungsform möglich, die über einen Sperrkörper, insbesondere in Form einer Kugel, verfügt, der in einem Durchbruch der Kupplungshülse einsitzt und von Verriegelungsmitteln, insbesondere in Form einer Schiebehülse, die in den zuvor beschriebenen Positionen gehalten wird. Bevorzugt ist eine Ausführungsform vorgesehen, bei der zwei Sperrkörper, insbesondere jeweils in Form einer Kugel, diametral entgegengesetzt in dem Verschluß angeordnet sind, wobei die den Sperrkörper steuernden Geometrien auch entsprechend zweifach und diametral entgegengesetzt vorgesehen sind. Weiterhin sind Ausführungsformen denkbar, die mehr als zwei Sperrkörper aufweisen.

Bei einer anderen Ausführungsform kann vorgesehen sein, daß die Verriegelungsmittel in der Entriegelstellung durch Verdrehung im Umfangsrichtung gegenüber der Kupplungshülse von dieser trennbar sind, wobei ein Verdrehen durch demontierbare Sicherungsmittel gesichert ist. Die Verdrehsicherung erfolgt mit Sicherungsmitteln, die in den Verriegelungsmitteln aufgenommen sind und radial in eine Nut der Kupplungshülse eingreifen, wobei die Nut auf dem Außenumfang der Kupplungshülse zu einem Teil in axialer Richtung umfangsversetzt zu dem Durchbruch angeordnet ist und an einer Stirnseite der Kupplungshülse mündet und mit einem anderen Ende in Umfangsrichtung in dem Durchbruch mündet.

Durch diese Anordnung ergibt sich vorteilhaft, daß der gesamte Verschluß über eine bajonettartigen Mechanismus einfach vormontierbar ist Da als Sicherungsmittel lediglich ein Gewindestift vorgesehen ist, ist kein besonderes Werkzeug hierfür erforderlich.

Zur drehfesten Befestigung des Verschlusses auf der Welle ist vorgesehen, daß die Kupplungshülse eine Längsverzahnung aufweist, über die die Kupplungshülse drehfest und axial verschiebbar auf eine Längsverzahnung der Welle montierbar ist

Eine bevorzugte Ausführungsform der Erfindung wird nachfolgend anhand der Zeichnungen erläutert. Hierin zeigt
Figur 1 einen erfindungsgemäßen Verschluß für eine Kupplungshülse
   a) im Halblängsschnitt in einer Einkuppelposition,
   b) in einer perspektivischen Ansicht,
Figur 2 einen erfindungsgemäßen Verschluß für eine Kupplungshülse
   a) im Halblängsschnitt in einer Auskuppelposftion
   b) im Halblängsschnitt in einer Entriegelstellung und
Figur 3 eine perspektivische Darstellung
   a) der Kupplungshülse,
   b) der Schiebehülse
   des erfindungsgemäßen Verschlusses für eine Kupplungshülse.

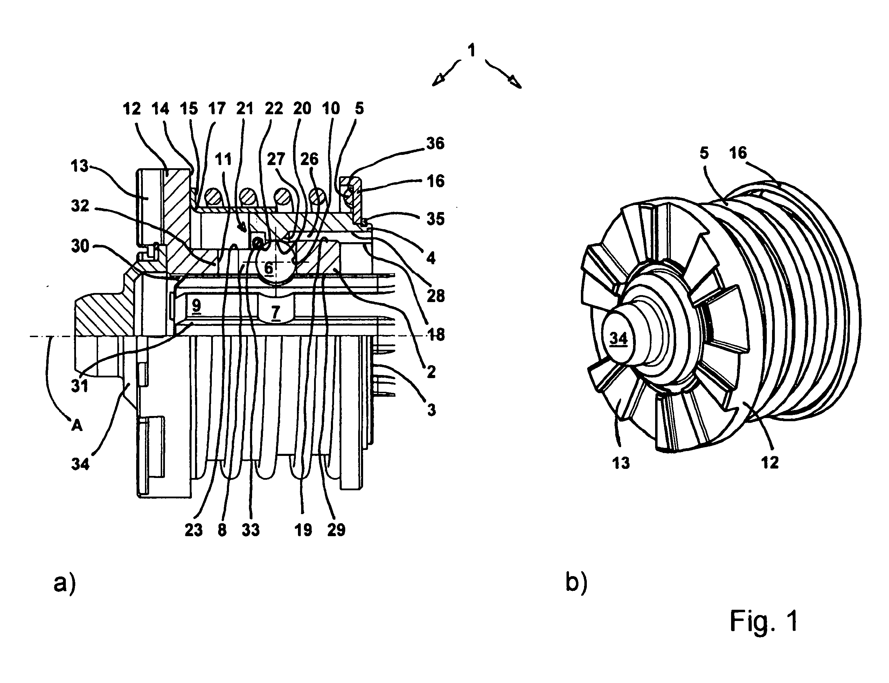

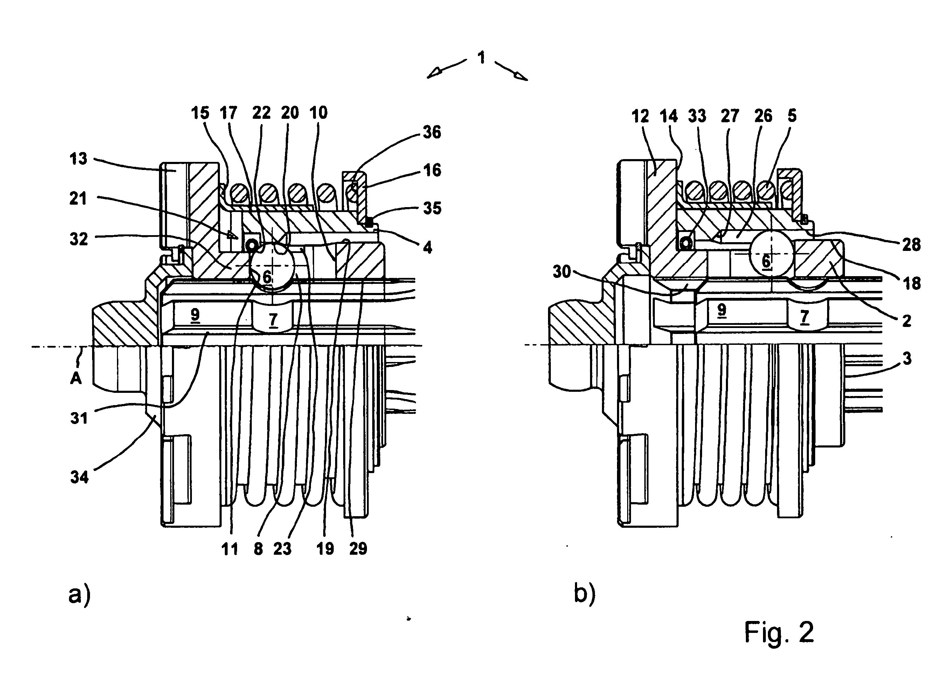

Die Figuren 1 und 2 werden zunächst gemeinsam beschrieben. Sie zeigen einen erfindungsgemäßen Verschluß 1 für eine Kupplungshülse 2, die um eine Längsachse A drehbar ist. Der Verschluß 1 umfaßt eine Kupplungshülse 2, Verriegelungsmittel in Form einer Schiebehülse 4, eine Zwischenhülse 17 und eine Druckfeder in Form einer Schraubenfeder 5, wobei diese Bauteile in der genannten Reihenfolge von innen nach außen koaxial zueinander und zur Längsachse A angeordnet sind.

Die Kupplungshülse 2 weist einen Hülsenabschnitt 32 und einen Flanschabschnitt 12 auf. Der Flanschabschnitt 12 weist auf seiner der Schiebehülse 4 abgewandten Seite Kupplungsklauen 13 auf. Auf der entgegengesetzten, der Schiebehülse 4 zugewandten Seite bildet der Flanschabschnitt 12 eine umlaufende und radial gerichtete Stützfläche 14. An der Stützfläche 14 des Flanschabschnittes 12 stützt sich die Zwischenhülse 17 mit ihrem einen Ende ab, das als radial von dem Hülsenabschnitt 32 nach außen gerichteter und umlaufender Kragen 15 ausgebildet ist. Auf der entgegengesetzten Seite des Kragens 15 stützt sich die Druckfeder 5 mit ihrem einen Ende ab. Mit ihrem anderen Ende ragt die Druckfeder 5 über das entsprechend andere Ende der Zwischenhülse 17 hinaus.

Während die Druckfeder 5 lediglich mit einem radialen Spiel gegenüber der Zwischenhülse 17 umfänglich angeordnet ist, läßt die Zwischenhülse 17 einen radialen Abstand zu der Kupplungshülse 2, in dem die Schiebehülse 4 einsitzt Hierbei umschließt ein Innenumfang 18 der Schiebehülse 4 einen Außenumfang 19 der Kupplungshülse 2 mit geringem Spiel.

An der Schiebehülse 4 ist an ihrem vom Flanschabschnitt 12 abgewandten Ende ein umlaufendes Kragenblech 16, das radial nach außen gerichtet ist, mittels eines Sicherungsrings 35 gehalten ist Die Schiebehülse 4 stützt sich über eine umlaufende und radial gerichtete Stützfläche 36 des Kragenblechs 16 an der Druckfeder 5 ab. Somit ist die Stützfläche 14 der Stützfläche 36 zugewandt und die Druckfeder 5 ist zwischen der Kupplungshülse 2 und der Schiebehülse 4 vorgespannt.

Die Kupplungshülse 2 weist eine Bohrung 3 auf, welche den Endbereich einer Welle 9 aufnimmt. Die Welle 9 ragt auf der von dem Flanschabschnitt 12 abgewandten Seite aus der Bohrung 3 heraus. Die Welle 9 weist eine Längsverzahnung 31 auf, die in eine entsprechende Längsverzahnung 30 der Bohrung 3 eingreift, um eine drehfeste Verbindung zwischen der Kupplungshülse 2 und der Welle 9 zu gewährleisten. Die Welle 9 weist eine Umfangsnut 7 auf. Ferner ist die Bohrung 3 flanschseitig mit einem demontierbaren Abdeckung 34 verschlossen.

Der Hülsenabschnitt 32 der Kupplungshülse 2 ist mit einem radialen und in axialer Richtung sich ersteckenden Durchbruch 8 versehen. Ferner ist der Hülsenabschnitt 32 auf seiner Außenumfangsfläche 19 mit einer Abflachung 23 versehen, die den Durchbruch 8 von dem Flanschabschnitt 12 aus gesehen U-förmig umschließt, so daß der Durchbruch 8 teilweise versetzt zu der Abflachung 23 liegt In dem Durchbruch 8 ist ein Sperrkörper in Form einer Sperrkugel 6 aufgenommen ist. Die axiale Erstreckung des Durchbruchs 8 ist begrenzt und größer als der Durchmesser der Sperrkugel 6, vorzugsweise beträgt sie mindestens den Durchmesser der Sperrkugel 6 zuzüglich der axialen Höhe der Kupplungsklauen 13. In radialer Richtung erstreckt sich der Durchbruch 8 durch die gesamte Wandung des Hütsenabschnitts 32.

Radial außen liegt die Sperrkugel 6 zunächst an einer SperrHäche 20 des Innenumfangs 18 der Schiebehülse 4 an. Weiterhin weist die Schiebehülse 4 einen radial nach innen gerichteten Vorsprung 21 auf, der in Form eines Spannstiftes 33 tangential zu dem Hülsenabschnitt 32 der Kupplungshülse 2 in die Abflachung 23 eingreift und somit den Außenumfang 19 des Hülsenabschnitts 32 hinterschneidet. Der Spannstift 33 besitzt auf der dem Flanschabschnitt 12 abgewandten Seite eine Stützfläche 22, an der sich die Sperrkugel 6 mittelbar an der Schiebehülse 4 abstützt. Durch die schräggestellte Ausrichtung der Stützfläche 22 bezogen auf die Längsachse A, erfährt die Sperrkugel 6 durch sie eine Abstützung sowohl in axialer als auch radialer Richtung.

Figuren 1a und b zeigen einen erfindungsgemäßen Verschluß 1 für eine Kupplungshülse 2 in einer Einkuppelposition. Der Durchmesser der Sperrkugel 6 ist größer als die Querschnittshöhe der Kupplungshülse 2 im Bereich des Durchbruchs 8, so daß die Sperrkugel 6 nach radial innen in die Bohrung 3 ragt und in die Umfangsnut 7 der Welle 9 eingreift. Vorzugsweise hat die Umfangsnut 7 einen runden Querschnitt.

In der Einkuppelposition stehen die Kupplungsklauen 13 über die Stirnseite der Welle 9 über. Die Sperrkugel 6 liegt auf ihrer einen Seite an einer ersten Begrenzungsfläche 10 an, die den Durchbruch 8 auf der dem Flansch 12 abgewandten Seite begrenzt. Auf ihrer anderen Seite stützt sich die Sperrkugel 6 an den Sperrflächen 20, 22 der Schiebehülse 4 bzw. des Sperrstiftes 33 ab, die sich somit in der Riegelstellung befindet. Die Druckfeder 5 ist zwischen der Kupplungshülse 2 und der Schiebehülse 4 vorgespannt, wodurch die Kupplungshülse zu einer Einkuppelposition beaufschlagt wird. Die Abstützung der wirkenden Federkraft erfolgt über die beiden Stützfläche 20, 22, über die Sperrkugel 6, über die erste Begrenzungsfläche 10 des Durchbruchs 8 und über die Umfangsnut 7 in der Welle 9.

Figur 2a zeigt einen erfindungsgemäßen Verschluß 1 für eine Kupplungshülse 2 in einer Auskuppelposition. Die Beschreibung erfolgt lediglich bezüglich der Unterschiede, die sich zu der in Figur 1 beschriebenen Einkuppelposition ergeben.

In der Auskuppelposition ist die Kupplungshülse 2 in Richtung der Längsachse A weiter auf die Welle 9 verschoben, so daß die Stirnseite der Kupplungsklauen 13 etwa mit der Stirnseite der Welle 9 fluchten. In dieser Position stützt sich die Sperrkugel 6 auf der dem Flansch 12 zugewandten Seite des Durchbruchs 8 an einer zweiten Begrenzungsfläche 11 ab. Die Schiebehülse 4 ist bezogen auf die Kupplungshülse 2 weiter auf diese in Richtung des Flansches 12 verschoben, so daß der Kragen 16 der Schiebehülse 4 mit seiner Stirnseite fluchtend mit der von dem Flansch 12 abgewandten Stirnseite der Schiebehülse 4 abschließt. Außerdem ist die Druckfeder 5 zwischen der Kupplungshülse 2 und der Schiebehülse 4 in einem höherem Maß vorgespannt, als in der Einkuppelposition.

Während des automatischen Kuppelvorgangs nimmt die Kupplungshülse 2 die Auskuppelposition ein, wenn Kupplungsklauen eines nicht dargestellten gegenteiligen Kupplungselements zunächst stirnseitig mit den Kupplungsklauen 13 der Kupplungshülse 2 aufeinanderstoßen. Hierbei weicht die Kupplungshülse 2 gegen die Federkraft der Druckfeder 5 in die Auskuppelposition aus. Daraufhin können das gegenteilige Kupplungselement und die Kupplungshülse 2 zueinander verdreht werden, bis die nicht dargestellt gegenteiligen Kupplungsklauen und die Kupplungsklauen 13 in entsprechende Lücken zwischen den jeweils anderen Klauen eingreifen können. In diesem Zustand wird die Kupplungshülse 2 mit den Kupplungsklauen 13 durch die Federkraft der Druckfeder 5 in die in Figur 1 gezeigte Einkuppelposition überführt und gehalten, so daß über die ineinandergreifenden Kupplungsklauen Drehmoment übertragen werden kann.

Figur 2b zeigt einen erfindungsgemäßen Verschluß 1 für eine Kupplungshülse 2 in einer Entriegelstellung. In der Entriegelstellung gelangt der Verschluß 1 für eine Kupplungshülse 2, ausgehend von der Einkuppelposition, durch Verschieben der Schiebehülse 2 entgegen der Federkraft der Druckfeder 5, um den gesamten Verschluß von der Welle 9 herunterzuschieben. Die Schiebehülse 4 weist auf ihrem Innenumfang 18 eine radial nach außen gerichtete Ausnehmung 26 auf. Wird die Schiebehülse 2 gegen die Federkraft in Richtung des Flanschabschnittes 12 verschoben, erreicht die Ausnehmung 26 eine Position, in der sie radial außerhalb der Sperrkugel 6 liegt und die Sperrkugel 6 in die Ausnehmung 26 nach radial außen wandern kann. Die Ausnehmung weist eine seitliche innenkonische Stützfläche 27 auf, die nach radial außen in einem in Achsrichtung verlaufenden Boden 28 der Ausnehmung 26 endet. Das radiale nach außen Wandern der Sperrkugel 6 wird erreicht, indem der gesamte Verschluß in die herunterzuziehende Richtung gezogen wird, so daß die Sperrkugel 6 durch den Querschnitt der Umfangsnut 7 nach radial außen bewegt wird und in die Ausnehmung 26 wandert. Somit ist der gesamte Verschluß axial frei beweglich.

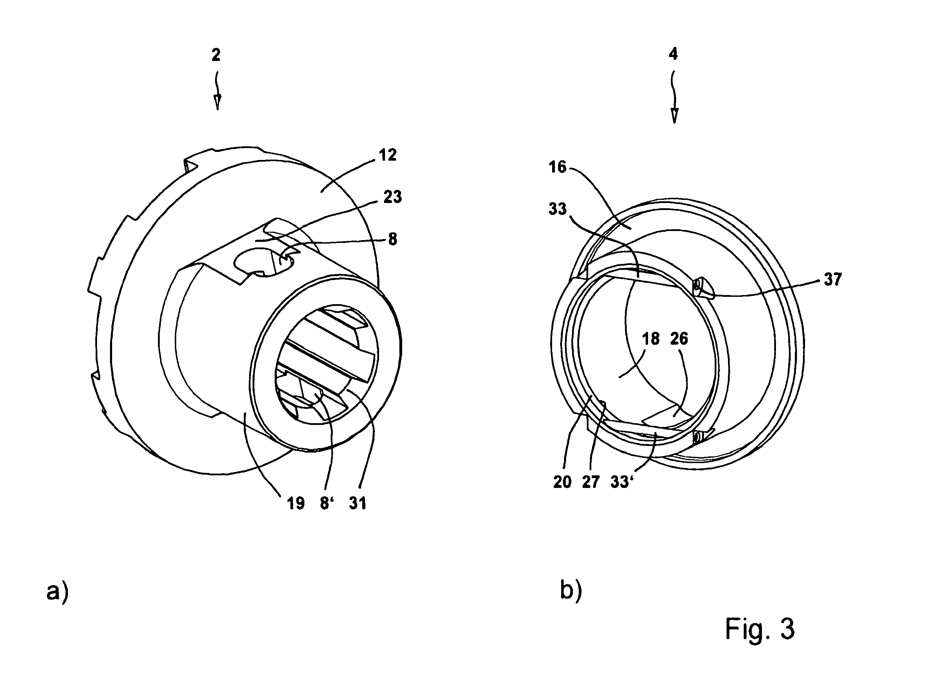

Figur 3a zeigt die Kupplungshülse 2 und Figur 3b die Schiebhülse 4 eines erfindungsgemäßen Verschlusses 1 für eine Kupplungshülse 2. Die Beschreibung erfolgt lediglich bezüglich der Unterschiede zu den Figuren 1 und 2.

In Figur 3a ist auf dem Außenumfang 19 der Kupplungshülse 2 die Abflachung 23 und der Durchbruch 8 zu erkennen. Weiterhin ist diametral zu der Abflachung 23 und dem Durchbruch 8 eine zweite Abflachung 23' und ein zweiter Durchbruch 8' vorhanden. In der Bohrung 3 ist die Längsverzahnung 30 der Kupplungshülse 2 zu erkennen.

In Figur 3b sind zwei Spannstifte 33, 33' zu erkennen, die von der Schiebehülse 4 aufgenommen sind, so daß die Spannstifte 33, 33' die Schiebehülse als Sekanten schneiden. Ferner ist auf dem Innenumfang 18 der Schiebehülse 4 die Ausnehmung 26 zu erkennen, wobei zu diametral entgegengesetzt eine zweite nicht dargestellte Ausnehmung angeordnet ist.

Die Figuren 3a und 3b verdeutlichen wie die Kupplungshülse 2 und die Schiebehülse 4 grundsätzlich verbunden werden. Zunächst werden die Sperrkugeln 6, 6', die Zwischenhülse 17 und die Druckfeder 5, wie in der gemeinsamen Beschreibung zu den Figuren 1 und 2 beschrieben, bezüglich der Kupplungshülse 2 angeordnet. Anschließend wird die Schiebehülse 4 in eine koaxiale Position zu der Kupplungshülse 2 gebracht, so daß der Durchbruch 8 und die Abflachung 23 sich überdecken, und die Schiebehülse 2 auf die Kupplungshülse 2 unter Kompression der Druckfeder 5 aufgeschoben werden kann. Anschließend werden die Spannstifte 33, 33' durch die Bohrungen 37 eingesteckt, so daß diese die den Außenumfang 19 der Kupplungshülse hinterschneiden und die Kupplungshülse 2 und die Schiebehülse 4 gegen ein axiales Lösen gesichert sind.

### Bezugszeichenliste

- A: Längsachse
- 1: Verschluß
- 2: Kupplungshülse
- 3: Bohrung
- 4: Schiebehülse
- 5: Druckfeder
- 6: Sperrkugel
- 7: Umfangsnut
- 8, 8': Durchbruch
- 9: Welle
- 10: erste Begrenzungsfläche
- 11: zweite Begrenzungsfläche
- 12: Flanschabschnitt
- 13: Kupplungsklauen
- 14: Stützfläche
- 15: Kragen
- 18: Kragen
- 17: Zwischenhülse
- 18: innenumfang
- 19: Außenumfang
- 20: Sperrfläche
- 21: Vorsprung
- 22: Sperrfläche
- 23, 23': Abflachung
- 26: Ausnehmung
- 27: Stützfläche
- 28: Boden
- 29: Innenumfang
- 30: Längsverzahnung der Kupplungshülse
- 31: Längsverzahnung der Welle
- 32: Hülsenabschnitt
- 33,33': Spannstift
- 34: Abdeckung
- 35: Sicherungsring
- 36: Stützfläche
- 37: Bohrung

## Patentansprüche

1. Verschluß (1) zum Sichern einer Kupplungshülse (2) auf einer mit einer Umfangsnut (7) versehenen Welle (9), umfassend
eine Kupplungshülse (2),
zumindest einen Sperrkörper (6), der bezogen auf eine Längsachse A in einem radialen Durchbruch (8) der Kupplungshülse (2) radial bewegbar aufgenommen ist, sowie
Verriegelungsmittel (4), die gegenüber dem zumindest einen Sperrkörper (6) und der Kupplungshülse (2) axial verschiebbar sind,
wobei in einer Riegelstellung der Verriegelungsmittel (4) der zumindest eine Sperrkörper (6) durch die Verriegelungsmittel (4) radial in einer Sperrstellung gehalten ist, in der der Sperrkörper (6) zum Eingreifen in die Umfangsnut (7) der Welle (9) in einer Sperrichtung radial aus dem Durchbruch (8) vorsteht,
**dadurch gekennzeichnet,**
**dass** der zumindest eine Sperrkörper (6) in dem Durchbruch (8) axial bewegbar ist, so dass in der Riegelstellung der Verriegelungsmittel (4) die Kupplungshülse (2) gegenüber den Verriegelungsmitteln (4) und gegenüber dem zumindest einen Sperrkörper (6) axial verstellbar ist.

2. Verschluß nach Anspruch 1,
**dadurch gekennzeichnet,**
**daß** Federmittel (5) vorgesehen sind, die die Kupplungshülse (2) axial zur Einnahme einer Einkuppelposition beaufschlagen, und
**daß** sich, in der Einkuppelposition der Kupplungshülse (2), die Verriegelungsmittel (4) gegenüber dem zumindest einen Sperrkörper (6) in der Riegelstellung befinden.

3. Verschluß nach Anspruch 2,
**dadurch gekennzeichnet,**
**daß** die Federmittel in Form einer Druckfeder (5) dargestellt sind, die sich, zumindest mittelbar, gegen die Kupplungshülse (2) und die Verriegelungsmittel (4) abstützt.

4. Verschluß nach Anspruch 3,
**dadurch gekennzeichnet,**
**daß** sich, in der Einkuppelposition der Kupplungshülse (2), die Kupplungshülse (2) über eine erste Begrenzungsfläche (10) des Durchbruchs (8) gegen den zumindest einen Sperrkörper (6) axial abstützt.

5. Verschluß nach Anspruch 4,
**dadurch gekennzeichnet,**
**daß** sich die Verriegelungsmittel (4) in der Riegelstellung über zumindest einen Vorsprung (21) gegen den Sperrkörper (6) axial abstützen.

6. Verschluß nach Anspruch 5,
**dadurch gekennzeichnet,**
**daß** der zumindest eine Vorsprung (21) einen Spannstift (33) umfaßt.

7. Verschluß nach einem der Ansprüche 2 bis 6,
**dadurch gekennzeichnet,**
**daß** die Kupplungshülse (2) entgegen der Federkraft der Federmittel (5) gegenüber den Verriegelungsmitteln (4) in eine Auskuppelposition axial verstellbar ist, in der sich die Verriegelungsmittel (4) gegenüber dem zumindest einen Sperrkörper (6) in der Riegelstellung befinden.

8. Verschluß nach Anspruch 7,
**dadurch gekennzeichnet,**
**daß** in der Auskuppelposition der zumindest eine Sperrkörper (6) an einer zweiten Begrenzungsfläche (11) des Durchbruchs (8) anliegt.

9. Verschluß nach einem der Ansprüche 1 bis 8,
**dadurch gekennzeichnet,**
**daß** sich der zumindest eine Sperrkörper (6) in der Sperrstellung und in der Riegelstellung der Veniegelungsmittel (4) entgegen der Sperrichtung gegen eine Sperrfläche (20) der Verriegelungsmittel (4) radial abstützt.

10. Verschluß nach einem der Ansprüche 1 bis 9.
**dadurch gekennzeichnet,**
**daß** die Verriegelungsmittel (4) gegenüber dem zumindest einen Sperrkörper (6) in eine Entriegelstellung axial verstellbar sind, in der der zumindest eine Sperrkörper (6) in eine Freigabestellung bewegbar ist, in der der Sperrkörper (6) in Sperrichtung nicht radial aus dem Durchbruch (8) herausragt

11. Verschluß nach einem der Ansprüche 1 bis 10,
**dadurch gekennzeichnet,**
**daß** der Durchbruch (8) in radialer Richtung zwischen zumindest einer Außenumfangfläche (19) und einer Innenumfangfläche (29) der Kupplungshülse (2) verläuft.

12. Verschluß nach Anspruch 11,
**dadurch gekennzeichnet,**
**daß** sich der Durchbruchs (8) zwischen den zumindest zwei Umfangsflächen (19, 29) in Sperrichtung verjüngt.

13. Verschluß nach einem der Ansprüche 1 bis 12,
**dadurch gekennzeichnet,**
**daß** die Verriegelungsmittel eine Schiebehülse (4) umfassen, die koaxial zur Längsachse A angeordnet ist.

14. Verschluß nach einem der Ansprüche 1 bis 13,
**dadurch gekennzeichnet,**
**daß** der zumindest eine Sperrkörper in Form einer Kugel (6) gestaltet ist.

15. Verschluß nach einem der Ansprüche 1 bis 14,
**dadurch gekennzeichnet,**
**daß** die Kupplungshülse (2) eine Längsverzahnung (30) aufweist, über die die Kupplungshülse (2) drehfest und axial verschiebbar auf eine Längsverzahnung (31) der Welle (9) montierbar ist.

## Claims

1. A lock (1) for securing a coupling sleeve (2) to a shaft (9) which is provided with a circumferential groove (7), comprising
a coupling sleeve (2),
at least one blocking member (6) which, with reference to the longitudinal axis A, is received in a radial through-aperture (8) of the coupling sleeve (2) so as to be radially movable, as well as
latching means (4) which are axially displaceable relative to the at least one blocking member (6) and the coupling sleeve (2),
wherein, in a latched position of the latching means (4), the at least one blocking member (6) is radially held by the latching means (4) in a locking position in which, for the purpose of engaging the circumferential groove (7) of the shaft (9), the blocking member (6) radially projects in a blocking direction from the through-aperture (8),
**characterised in**
**that** the at least one blocking member (6) is axially movable in the through-aperture (8), so that, in the latching position of the latching means (4) the coupling sleeve (2) is axially adjustable relative to the latching means (4) and relative to the at least one blocking member (6).

2. A lock according to claim 1,
**characterised in**
**that** there are provided spring means (5) which axially load the coupling sleeve (2) towards assuming a coupling position and
**that**, in the coupled position of the coupling sleeve (2), the latching means (4) are in the latched position relative to the at least one blocking member (6).

3. A lock according to claim 2,
**characterised in**
**that** the spring means are provided in the form of a pressure spring (5) which, at least indirectly, is supported against the coupling sleeve (2) and the latching means (4).

4. A lock according to claim 3,
**characterised in**
**that**, in the coupling position of the coupling sleeve (2), the coupling sleeve (2), via a first delimiting face (10) of the aperture (8), is axially supported against the at least one blocking member (6).

5. A lock according to claim 4,
**characterised in**
**that** the latching means (4), in the latched position, are axially supported against the blocking member (6) via at least one projection (21).

6. A lock according to claim 5,
**characterised in**
**that** the at least one projection (21) comprises a dowel pin (33).

7. A lock according to any one of claims 2 to 6,
**characterised in**
**that** the coupling sleeve (2), against the spring force of the spring means (5), is axially adjustable relative to the latching means (4) into an uncoupling position in which the latching means (4) are in the latched position relative to the at least one blocking member (6).

8. A lock according to claim 7,
**characterised in**
**that** in the uncoupling position, the at least one blocking member (6) rests against a second delimiting face (11) of the through-aperture (8).

9. A lock according to any one of claims 1 to 8,
**characterised in**
**that** the at least one blocking member (6), in the blocking position and in the latched position of the latching means (4), is radially supported against the blocking direction on a blocking face (20) of the latching means (4).

10. A lock according to any one of claims 1 to 9,
**characterised in**
**that**, relative to the at least one blocking member (6), the latching means (4) are axially adjustable into an unlatched position in which the at least one blocking member (6) can be moved into a releasing position in which the blocking member (6) does not project from the through-aperture (8) in the blocking direction.

11. A lock according to any one of claims 1 to 10,
**characterised in**
**that**, in the radial direction, the through-aperture (8) extends between an outer circumferential face (19) and an inner circumferential face (29) of the coupling sleeve (2).

12. A lock according to claim 11,
**characterised in**
**that** the through-aperture (8) is tapered in the blocking direction between the at least two circumferential faces (19, 29).

13. A lock according to any one of claims 1 to 12,
**characterised in**
**that** the lataching means comprise a sliding sleeve (4) which is arranged coaxially relative to the longitudinal axis A.

14. A lock according to any one of claims 1 to 13,
**characterised in**
**that** the at least one blocking member is provided in the form of a ball (6).

15. A lock according to any one of claims 1 to 14,
**characterised in**
**that** the coupling sleeve (2) comprises longitudinal teeth (30) via which the coupling sleeve (2) can be mounted in a rotationally fast and axially displaceable way on longitudinal teeth (31) of the shaft (9).

## Revendications

1. Fermeture (1) d'une fixation d'une douille d'embrayage (2) sur un arbre (9) muni d'une rainure périphérique (7) comprenant
une douille d'embrayage (2),
au moins un corps de blocage (6) qui est reçu en pouvant se déplacer radialement dans un passage (8) radial de la douille d'embrayage (2) en se rapportant à un axe longitudinal A,
ainsi que des moyens de verrouillage (4) qui peuvent être poussés axialement par rapport à l'au moins un corps de blocage (6) et la douille d'embrayage (2),
sachant que dans une position de verrouillage des moyens de verrouillage (4), l'au moins un corps de blocage (6) est maintenu radialement dans une position de blocage par les moyens de verrouillage (4), dans laquelle le corps de blocage (6) fait saillie radialement du passage (8) dans une direction de blocage pour se mettre en prise dans la rainure périphérique (7) de l'arbre (9),
**caractérisée en ce que**
l'au moins un corps de blocage (6) peut être déplacé axialement dans le passage (8), de façon à ce que dans la position de verrouillage des moyens de verrouillage (4), la douille d'embrayage (2) puisse être réglée axialement par rapport aux moyens de verrouillage (4) et par rapport à l'au moins un corps de blocage (6).

2. Fermeture selon la revendication 1,
**caractérisée en ce que**
des moyens élastiques (5) sont prévus qui sollicitent la douille d'embrayage (2) axialement pour adopter une position d'embrayage, et
**en ce que** les moyens de verrouillage (4) se trouvent, dans la position d'embrayage de la douille d'embrayage (2), dans la position de verrouillage par rapport à l'au moins un corps de blocage (6).

3. Fermeture selon la revendication 2,
**caractérisée en ce que**
les moyens élastiques sont représentés sous forme d'un ressort de compression (5) qui s'appuie, au moins indirectement, contre la douille d'embrayage (2) et les moyens de verrouillage (4).

4. Fermeture selon la revendication 3,
**caractérisée en ce que**
la douille d'embrayage (2), dans la position d'embrayage de la douille d'embrayage (2), s'appuie axialement contre l'au moins un corps de blocage (6) par une première surface de délimitation (10) du passage (8).

5. Fermeture selon la revendication 4,
**caractérisée en ce que**
les moyens de verrouillage (4), dans la position de verrouillage, s'appuient axialement contre le corps de blocage (6) par au moins une saillie (21).

6. Fermeture selon la revendication 5,
**caractérisée en ce que**
l'au moins une saillie (21) comprend une goupille de serrage (33).

7. Fermeture selon l'une des revendications 2 à 6,
**caractérisée en ce que**
la douille d'embrayage (2) peut être réglée axialement dans une position de désembrayage par rapport aux moyens de verrouillage (4) contre la force élastique des moyens élastiques (5), dans laquelle les moyens de verrouillage (4) se trouvent dans la position de verrouillage par rapport à l'au moins un corps de blocage (6).

8. Fermeture selon la revendication 7,
**caractérisée en ce que**
dans la position de désembrayage, l'au moins un corps de blocage (6) se trouve sur une deuxième surface de délimitation (11) du passage (8).

9. Fermeture selon l'une des revendications 1 à 8,
**caractérisée en ce que**
l'au moins un corps de blocage (6), dans la position de blocage et dans la position de verrouillage des moyens de verrouillage (4), s'appuie radialement contre une surface de blocage (20) des moyens de verrouillage (4) dans le sens contraire de la direction de blocage.

10. Fermeture selon l'une des revendications 1 à 9,
**caractérisée en ce que**
les moyens de verrouillage (4) peuvent être réglés axialement dans une position de déverrouillage par rapport à l'au moins un corps de blocage (6), dans laquelle l' au moins un corps de blocage (6) peut être déplacé dans une position de dégagement dans laquelle le corps de blocage (6) ne fait pas saillie radialement du passage (8) dans la direction de blocage.

11. Fermeture selon l'une des revendications 1 à 10,
**caractérisée en ce que**
le passage (8) a un tracé en direction radiale entre au moins une surface périphérique extérieure (19) et une surface périphérique intérieure (29) de la douille d'embrayage (2).

12. Fermeture selon la revendication 11,
**caractérisée en ce que**
le passage (8) se rétrécit entre les au moins deux surfaces périphériques (19, 29).

13. Fermeture selon l'une des revendications 1 à 12,
**caractérisée en ce que**
les moyens de verrouillage comprennent une douille coulissante (4) qui est disposée coaxialement à l'axe longitudinal A.

14. Fermeture selon l'une des revendications 1 à 13,
**caractérisée en ce que**
l'au moins un corps de blocage (6) à la forme d'une sphère.

15. Fermeture selon l'une des revendications 1 à 14,
**caractérisée en ce que**
la douille d'embrayage (2) présente une denture longitudinale (30) par laquelle la douille d'embrayage (2) peut être montée fixe en rotation et en pouvant être déplacée axialement sur une denture longitudinale (31) de l' arbre (9).
